(19) Europäisches Patentamt
European Patent Office
Office européen des brevets

(11) EP 1 754 395 B1

(12) # EUROPÄISCHE PATENTSCHRIFT

(45) Veröffentlichungstag und Bekanntmachung des Hinweises auf die Patenterteilung:
**11.07.2012 Patentblatt 2012/28**

(21) Anmeldenummer: **04732995.8**

(22) Anmeldetag: **14.05.2004**

(51) Int Cl.:
***G01J 1/02*** (2006.01) ***H05B 33/08*** (2006.01)
***G01J 1/08*** (2006.01) ***G01J 1/30*** (2006.01)

(86) Internationale Anmeldenummer:
**PCT/EP2004/050813**

(87) Internationale Veröffentlichungsnummer:
**WO 2005/117497 (08.12.2005 Gazette 2005/49)**

(54) **VERFAHREN ZUR STABILISIERUNG DER TEMPERATURABHÄNGIGKEIT DER LICHTEMISSION EINER LED**

METHOD FOR STABILIZING THE TEMPERATURE SENSITIVITY OF THE EMISSION OF LIGHT OF AN LED

PROCEDE DE STABILISATION DE LA DEPENDANCE A LA TEMPERATURE DE L'EMISSION LUMINEUSE D'UNE DEL

(84) Benannte Vertragsstaaten:
**AT BE BG CH CY CZ DE DK EE ES FI FR GB GR HU IE IT LI LU MC NL PL PT RO SE SI SK TR**

(43) Veröffentlichungstag der Anmeldung:
**21.02.2007 Patentblatt 2007/08**

(73) Patentinhaber: **FLIR Radiation GmbH**
**42653 Solingen (DE)**

(72) Erfinder:
- **STEIN, Jürgen**
  **42349 Wuppertal (DE)**
- **PAUSCH, Guntram**
  **01099 Dresden (DE)**
- **SAUCKE, Karen**
  **70197 Stuttgart (DE)**

(74) Vertreter: **Schramm, Michael et al**
**Bettinger Schneider Schramm,**
**Patent- und Rechtsanwälte**
**Postfach 86 02 67**
**81629 München (DE)**

(56) Entgegenhaltungen:
**EP-A- 1 039 597** **EP-A- 1 283 569**
**US-A- 4 160 165** **US-A- 4 995 105**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur Korrektur der Temperaturabhängigkeit der von einer Licht aussendenden Diode (LED), die im Impulsbetrieb mit im wesentlichen konstanter Impulsdauer betrieben wird, emittierten und in einem Lichtdetektor gemessenen Lichtmenge.

Die emittierte Lichtmenge einer LED hängt von deren Temperatur ab. Bei Labor-anwendungen nach dem Stand der Technik, bei denen eine LED als Referenzlichtquelle eingesetzt wird, wird daher die LED und unter Umständen die damit verbundene Messapparatur temperiert, so dass die Temperatur und damit die emittierte Lichtmenge der LED im Ergebnis konstant bleibt.

Bei Anwendungen außerhalb von Labors, bei denen eine derartige Klimatisierung nicht oder nur unter erhöhtem Aufwand möglich ist, ist es daher erforderlich, die gemessenen Werte der Lichtmenge um die Temperatur bedingten Einflüsse zu korrigieren, um so die Fehler des Messergebnisses zu verringern. Verwendet man eine derartige LED etwa als Lichtquelle zur Stabilisierung eines Fotomultipliers, der etwa als Lichtdetektor in einem Szintillationsdetektor, beispielsweise einem mobilen Detektor zur Identifizierung von Radioisotopen (Handheld Radioisotope Identification Device - RID) zum Einsatz kommt, ist die LED Temperaturschwankungen im Bereich von -20° C bis +50° C ausgesetzt. Die Systemverstärkung des Lichtdetektors kann dabei ohne weiteres um 20% und mehr schwanken, so dass eine Stabilisierung der Verstärkung des Lichtdetektors erforderlich ist, um die Energieverstärkung und die Energieauflösung des RID ausreichend gut zu halten. Zur Stabilisierung eines derartigen Lichtdetektors mit einer LED ist es daher erforderlich, die Temperaturabhängigkeit der von der LED emittierte Lichtmenge zu kennen.

Es sind Verfahren zur Stabilisierung bekannt, bei denen die Temperatur am oder im Detektor gemessen wird und die Temperatur bedingten Effekte mit Hilfe von vorab gemessenen Kalibrierungstabellen ausgeglichen werden. Diese Verfahren haben jedoch den Nachteil, dass eine Temperaturmessung bei schnellen Temperaturwechseln nur schwer zu realisieren ist, zumal oft noch keine gleichmässige Temperaturverteilung im Detektor erwartet werden kann. Dazu kommt, dass die Verstärkung etwa eines Fotomultipliers nicht nur von dessen Temperatur, sondern auch von der aktuellen Zählrate und dessen Vorgeschichte, d.h. dessen Hysterese und Alter, abhängt. Es hat sich gezeigt, dass eine ausreichend genaue Vorhersage der Verstärkung unter Berücksichtigung aller Parameter nicht möglich ist.

Für die Stabilisierung kommen daher oft aktive Verfahren während der eigentlichen Messung zum Einsatz. Meist werden radioaktive Eichquellen oder natürliche Hintergrundstrahlung verwendet, um eine derart aktive Stabilisierung zu erreichen. Dies führt jedoch zu einem Optimierungsproblem, da ein Kompromiss aus genügend kurzen und dennoch ausreichend genauen Kalibrierungsmessungen gefunden werden muss. Zudem führt jede zusätzliche radioaktive Strahlung zu einer Reduktion der Gesamtempfindlichkeit des Systems.

Eine Alternative ist die getrennte Stabilisierung von Lichtdetektor und Szintillator - letzteres ist etwa in der PCT/EP2004/050754 offenbart. Es ist bekannt, für die Stabilisierung des Lichtdetektors eine gepulste Lichtquelle, etwa eine LED, als Eichnormal zu verwenden. Es ist auch bekannt, auf diese Weise in Laboranwendungen die Verstärkung von Lichtdetektoren zu stabilisieren oder zu überwachen. Nachteilig an diesem Stand der Technik ist, dass die Lichtemission einer LED von deren Temperatur, genauer deren Sperrschichttemperatur $T_{LED}$ abhängt. Daher ist es bei den bekannten Verfahren entweder erforderlich, die Temperatur konstant zu halten oder sie zumindest zu überwachen, oder die von der LED jeweils emittierte Lichtmenge präzise mit einem separaten Messgerät zu überwachen. Ein derartiger Aufbau ist nicht nur technisch aufwändig und kostenintensiv, sondern benötigt auch zusätzliche Energie und zusätzlichen Raum, was den Einsatz in Batterie betriebenen mobilen RID's erschwert.

Aus der Sensortechnik ist ein Verfahren bekannt, über eine Strommessung bei konstant gehaltener Betriebsspannung oder über eine Messung der Flussspannung bei konstant gehaltenem Strom die Temperatur von Halbleiterbauelementen, beispielsweise Dioden, zu messen.

Aufgabe der vorliegenden Erfindung ist es daher, ein Verfahren zur Verfügung zu stellen, das die oben beschriebenen Nachteile des Standes der Technik vermeidet, um den Aufwand für die Stabilisierung von Lichtdetektoren mit Hilfe gepulster LEDs zu senken.

Aufgabe der Erfindung ist es weiterhin, einen Lichtdetektor zur Verfügung zu stellen, dessen Signale, einschließlich der von der zugehörigen Elektronik erzeugten Impulshöhenspektren, mit Hilfe einer gepulsten LED bezüglich temperaturabhängiger und anderweitig bedingter Schwankungen korrigiert und somit stabilisiert werden können. Aufgabe der Erfindung ist darüber hinaus, einen Detektor zur Messung von Strahlung, bevorzugt ionisierender Strahlung, zur Verfügung zu stellen, der mit einer gepulsten LED stabilisiert werden kann.

Diese Aufgaben werden zunächst durch die Verfahren und Vorrichtungen nach den Ansprüchen gelöst. So wird ein Verfahren zur Verfügung gestellt, nach dem die von der Temperatur abhängige emittierte Lichtmenge L einer Licht aussendenden Diode, unter Verwendung eines vorbestimmten, zu der Temperatur T der LED in einem vorbestimmten Verhältnis stehenden Parameter X korrigiert wird. Aus dem Parameter X wird dabei ein Korrekturfaktor K, vorzugsweise unter Verwendung einer Kalibriertabelle, besonders bevorzugt unter Verwendung einer geschlossenen, vorbestimmten Funktion, bestimmt, mit dem die gemessene emittierte Lichtmenge L um die Temperatur bedingten Schwankungen der emittierten Lichtmenge korrigiert wird. Die Diode wird dabei im Impulsbetrieb mit im Wesentlichen konstanter Impulsdauer $t_P$ betrieben. Der Parameter X wird dabei aus mindestens zwei Ausgangssignalen der LED selbst bestimmt, die zueinander in vorbestimmter Weise in Beziehung gesetzt werden.

Es hat sich dabei als vorteilhaft erwiesen, zunächst die Temperatur T der LED aus dem gemessenen Parameter X zu bestimmen, wobei eine Kalibriertabelle verwendet werden kann. Bevorzugt ist es auch möglich, eine geschlossene, vorbestimmte Funktion zu verwenden. Anschließend wird der Korrekturfaktor K aus der Temperatur T bestimmt, wobei ebenfalls bevorzugt eine Kalibriertabelle oder eine geschlossene, vorbestimmte Funktion verwendet wird.

Weiterhin wird ein Verfahren zur Temperaturstabilisierung einer Licht aussendenden Diode (LED) zur Verfügung gestellt, wobei die LED im Impulsbetrieb mit im wesentlichen konstanter Impulsdauer $t_P$ betrieben wird, wobei ein vorbestimmter, zu der Temperatur T der LED in einem vorbestimmten Verhältnis stehender Parameter X als Führungsgröße verwendet wird, wobei der Parameter X aus min-destens zwei Ausgangssignalen der LED bestimmt wird, die zueinander in einer vorbestimmten Weise in Beziehung gesetzt werden.

Es hat sich als günstig erwiesen, die LED so zu betreiben, dass die Impulsdauer $t_P$ im Wesentlichen konstant ist, die an der LED anliegende Spannung jedoch zwischen mindestens einer ersten Spannung $U_{P1}$ und mindestens einer zweiten, von $U_{P1}$ verschiedenen Spannung $U_{P2}$ wechselt. Während der Impulses ist die Spannung jeweils im wesentlichen konstant. Gemessen werden dann die mittlere Lichtmengen L(Up) der Impulse mit den verschiedenen Spannungen Up, also mindestens die mittlere Lichtmenge $L(U_{P1})$ des Impulses mit der Spannung $U_{P1}$ und die mittlere Lichtmenge $L(U_{P2})$ des Impulses mit der Spannung $U_{P2}$. Die Bestimmung des Parameters X erfolgt dann aus dem Verhältnis der Lichtmengen $L(U_P)$ zueinander. Die Verwendung des Verhältnisses mindestens zweier Lichtmengen bei konstanter Impulsdauer aber verschiedener Spannungen führt dazu, dass durch Temperaturschwankungen oder durch andere Effekte bedingte Verstärkungsschwankungen des Lichtdetektors keinen Einfluss auf die Bestimmung des Parameters X haben.

Das Verfahren kann auch so gestaltet werden, dass an die im Impulsbetrieb befindliche LED bei ebenfalls konstanter Impulsdauer $t_P$ ein periodisch zwischen mindestens einem ersten Wert $I_{P1}$ und mindestens einem zweiten, von $I_{P1}$ ve r-schiedenen Wert $I_{P2}$ wechselnder Strom angelegt wird. Während der. Impulses ist der durch die LED fliessende Strom jeweils im wesentlichen konstant. Gemessen werden dann die mittlere Lichtmengen $L(I_P)$ der Impulse mit den verschiedenen Strömen Ip, also mindestens die mittlere Lichtmenge $L(I_{P1})$ des Impulses mit dem Strom $I_{P1}$ und der mittleren Lichtmengen $L(I_{P2})$ des Impulses mit dem Strom $I_{P2}$. Der Parameter X wird dann aus dem Verhältnis der Lichtmengen $L(I_P)$ zueinander bestimmt.

Um den Einfluss von Ein- und Ausschalteffekten oder ähnlichen Einflüssen auf die Lichtemission der LED zu unterdrücken, hat es sich als besonders vorteilhaft erwiesen, den Parameter X wie folgt zu bestimmen: Betreiben der LED im Impulsbetrieb, so dass die Impulsdauer tp im wesentlichen zwei unterschiedliche, im wesentlichen konstante, Werte $t_{PS}$ und $t_{PL}$ annimmt und die Spannung an der LED periodisch zwischen mindestens einer ersten Spannung $U_{P1}$ und mindestens einer zweiten, von $U_{P1}$ verschiedenen Spannung $U_{P2}$ wechselt, Messen der mittleren Lichtmengen L ($U_P$; $t_{PS}$) und L($U_P$; $t_{PL}$) der Impulse mit mindestens den Spannungen $U_{P1}$ und $U_{P2}$ und den Impulsdauern $t_{PS}$ und $t_{PL}$, Bestimmung der Differenzen $D_{P1}$ und $D_{P2}$ der Lichtmengen L($U_{P1}$; $t_{PL}$) und L($U_{P1}$; $t_{PS}$) sowie L($U_{P2}$; $t_{PL}$) und L($U_{P2}$; $t_{PS}$) und Bestimmung des Parameters X aus dem Verhältnis der Differenzen der Lichtmengen.

Ebenso gut ist es möglich, den Parameter X wie folgt zu bestimmen: Betreiben der LED im Impulsbetrieb, so dass die Impulsdauer tp im wesentlichen zwei unterschiedliche, im wesentlichen konstante, Werte $t_{PS}$ und $t_{PL}$ annimmt und der durch die LED fliessende Strom periodisch zwischen mindestens einem ersten Wert $I_{P1}$ und mindestens einem zweiten, von $I_{P1}$ verschiedenen Wert $I_{P2}$ wechselt, Messen der mittleren, Lichtmengen L($I_P$; $t_{PS}$) und L($I_P$; $t_{PL}$) der Impulse mit mindestens den Strömen $I_{P1}$ und $I_{P2}$ und den Impulsdauern $t_{PS}$ und $t_{PL}$, Bestimmung der Differenzen $D_{P1}$ und $D_{P2}$ der Lichtmengen L($I_{P1}$; $t_{PL}$) und L($I_{P1}$; $t_{PS}$) sowie L($I_{P2}$; $t_{PL}$) und L($I_{P2}$; $t_{PS}$) und Bestimmung des Parameters X aus dem Verhältnis der Differenzen der Lichtmengen.

Es hat sich weiterhin als vorteilhaft erwiesen, wenn die Lichtmengen $L(U_P)$ bzw. $L(I_P)$, d.h mindestens die Lichtmengen $L(U_{P1})$ und $L(U_{P2})$ oder $L(I_{P1})$ und $L(I_{P2})$, mit einem Lichtdetektor, bevorzugt einem Fotomultiplier, einem Hybrid-Fotomultiplier, einer Avalanche-Fotodiode oder einer Fotodiode mit Verstärker bestimmt werden. Die von diesem Lichtdetektor gemessenen Lichtmengen werden bevorzugt durch Anwendung einer oder mehrerer der folgenden Verfahrensschritte bestimmt: Durchführung einer Impulshöhen-Spektrometrie der Detektorsignale und/oder Messung des mittleren Stromflusses im Lichtdetektor und/oder Messung der in der fotoempfindlichen Schicht des Lichtdetektors durch den LED-Impuls erzeugten Ladungsmenge, bevorzugt durch Spektrometrie der, bevorzugt bereits verstärkten, durch die LED-Impulse ausgelösten Ladungssignale.

Vorteilhaft ist es weiterhin, wenn die LED einen Vorwiderstand umfasst, wobei besonders vorteilhaft der Vorwiderstand so gewählt wird, dass sein Widerstand nicht linear von der Temperatur T abhängt, besonders bevorzugt in einer Weise, dass die Abhängigkeit oder zumindest die Nichtlinearität der Abhängigkeit des Korrekturfaktors K von der Temperatur T annähernd durch die Temperaturabhängigkeit des Vorwiderstandes kompensiert wird.

Beansprucht ist weiterhin ein Verfahren zur Stabilisierung eines Lichtdetektors, bevorzugt eines Fotomultipliers, eines Hybrid-Fotomultipliers, einer Avalanche-Fotodiode oder einer Fotodiode mit Verstärker, wobei der Lichtdetektor mit mindestens einer LED optisch verbunden ist, wobei mindestens eine LED im Impulsbetrieb betrieben wird und bei dem die Ausgangssignale des Lichtdetektors mit einem Stabilisierungsfaktor stabilisiert werden, wobei der Stabilisierungsfaktor aus den von mindestens einer LED emittierten Signalen erzeugt wird und bei dem die Temperaturabhängigkeit der Lichtemission mindestens einer LED mit einem oben beschriebenen Verfahren krrigiert wird.

Beansprucht ist weiterhin ein Verfahren zur Stabilisierung der von einem Szintillationsdetektor zur Messung von Strahlung, bevorzugt ionisierender Strahlung, durch die im Detektor zumindest teilweise absorbierte Strahlung erzeugten und von der Betriebstemperatur des Detektors abhängigen Signale, wobei der Szintillationsdetektor zumindest einen Lichtdetektor und mindestens eine mit diesem optisch verbundene LED aufweist, wobei der Stabilisierungsfaktor zur Stabilisierung des Szintillationsdetektors aus den von mindestens einer LED emittierten Signalen erzeugt wird und bei dem die Temperaturabhängigkeit der Lichtemission der LED nach einem der oben beschriebenen und in den Ansprüchen 1 bis 11 beanspruchten Verfahren korrigiert wird. Es kann von Vorteil sein, wenn zumindest eine, bevorzugt die optische, Verbindung zwischen LED und Szintillationsdetektor Wärme leitend ausgebildet ist, da dann die Temperatur der Wärme leitend mit dem Szintillationsdetektor verbundenen LED im wesentlichen der Temperatur des Szintillators entspricht.

Bei allen der beschriebenen Verfahren erfolgt die Signalverarbeitung bevorzugt digital.

Beansprucht ist darüber hinaus ein Lichtdetektor mit Signalverarbeitungsvorrichtung, bevorzugt ein Fotomultiplier, ein Hybrid-Fotomultiplier, eine Avalanche-Fotodiode oder eine Fotodiode mit Verstärker, wobei mindestens eine LED mit dem Lichtdetektor optisch verbunden ist, bei dem mindestens eine LED im Impulsbetrieb betrieben wird und die Ausgangssignale des Lichtdetektors mit einem Stabilisierungsfaktor stabilisiert werden, wobei der Stabilisierungsfaktor aus den von mindestens einer LED erzeugten Signalen erzeugt wird und bei dem die Temperaturabhängigkeit der Lichtemission mindestens einer LED nach einem der oben beschriebenen und in Ansprüchen 1 bis 11 beanspruchten Verfahren korrigiert wird. Auch hier erfolgt die Signalverarbeitung bevorzugt digital.

Beansprucht ist weiterhin ein Szintillationsdetektor zur Messung von Strahlung, bevorzugt ionisierender Strahlung, wobei der Szintillationsdetektor mindestens einen oben beschriebenen Lichtdetektor aufweist, der das das vom Szintillationsdetektor erzeugte Licht zumindest teilsweise misst. In einer speziellen Ausführungsform werden die durch die im Detektor zumindest teilweise absorbierte Strahlung erzeugten und von der Betriebstemperatur des Detektors abhängigen Signale gemessen und mit einem zur Temperatur T des Szintillators in einem vorbestimmten Verhältnis stehenden Stabilisierungsfaktor S stabilisiert, wobei mindestens eine LED des Lichtdetektors mit dem Szintillationsdetektor Wärme leitend verbunden ist und wobei der Temperatur abhängige Stabilisierungsfaktor S zur Stabilisierung des Szintillationsdetektors auf vorbestimmte Weise, bevorzugt unter Verwerdung einer Kalibrierungstabelle, besonders bevorzugt unter Verwendung einer vorbestimmten funktionalen Abhängigkeit, aus dem Parameter X mindestens einer mit dem Szintillationsdetektor Wärme leitend verbundenen LED nach einem der vorhergehend beschriebenen Verfahrensschritte bestimmt wird.

Die vorliegende Erfindung stellt ein technisch sehr einfaches und günstiges Verfahren zur Temperaturstabilisierung von LED-Referenzlichquellen, die beispiels-weise zur Stabilisierung von Licht- und/oder Szintillations-Detektoren genutzt werden, zur Verfügung, in dem es die ohnehin für die Stabilisierung zu messenden Impulshöhenspektren der LED-Signale auswertet. Es ist daher weder eine radioaktive Eichquelle erforderlich, noch die Verwendung eines zusätzlichen Lichtdetektors zur Überwachung der von der LED emittierten Lichtmenge in Abhängigkeit von der Temperatur. Es genügt der ohnehin vorhandene Lichtdetektor, auf dessen Stabilität es nicht ankommt, solange sich dessen Verstärkung nur in Zeiträumen ändert, die größer sind als das Umschaltintervall der verschiedenen LED Moden. Dieses Umschaltintervall kann sehr klein gehalten werden (bis < 1 ms), ist aber mindestens so groß wie der zeitliche Abstand zwischen zwei LED-Pulsen.

Im Folgenden werden bevorzugte Ausführungsbeispiele anhand der nachfolgend wiedergegebenen Figuren beschrieben. Es zeigen

| | |
|---|---|
| Fig. 1 | Messeinrichtung zur Kalibrierung der LED; |
| Fig. 2 | Spannungsverläufe $U_{P1}$ und $U_{P2}$ an der LED in Abhängigkeit von der Zeit t; |
| Fig. 3a | Spannungsverläufe für eine Spannungen Up bei verschiedenen Impulslängen $t_{PS}$ und $t_{PL}$ in Abhängigkeit von der Zeit t; |
| Fig. 3b | Schematische Darstellung der Differenz $D_P$, die aus zwei Signalen unterschiedlicher Länge bei gleicher Spannung U gewonnen wird; |
| Fig. 4 | Impulshöhenspektrum der LED-Impulse; |
| Fig. 5 | Abhängigkeit der Lichtmenge L und der daraus abgeleiteten Korrekturfaktoren K von der LED-Temperatur für zwei Betriebsregimes der LED (Messwerte) |
| Fig. 6 | Abhängigkeit des Lichtmengenverhältnisses R, bestimmt aus den in Fig. 5 gezeigten Messwerten, von der LED-Temperatur |
| Fig. 7 | Abhängigkeit der Lichtmenge L und der daraus abgeleiteten Korrekturfaktoren K von dem Lichtmengenverhältnis R (Messdaten) |
| Fig. 8 | Abhängigkeit des Quotienten aus den Lichtmengendifferenzen $D_{P1}$ und $D_{P2}$ von der LED-Temperatur |

In einer Test- und Kalibriervorrichtung nach Fig. 1 ist eine LED so angeordnet, dass sie unabhängig von dem Szintillationsdetektor, bestehend aus NaI(T1)-Szintillatorkristall und Fotomultiplier PMT, mit Hilfe eines Peltier-Elementes P und eines Kühlkörpers H geheizt oder gekühlt werden kann. Die LED befindet sich dabei in einem temperierten Aluminiumblock, dessen Temperatur mit einem herkömmlichen Temperatursensor T gemessen wird. Das Licht der LED tritt durch ein optisches Fenster O in den Szintillatorkristall ein.

Die LED wird von einer Treiberschaltung im gepulsten Betrieb mit einer einstellbaren Spannung versorgt. Die Treiberschaltung selbst, wie auch die gesamte sonstige erforderliche Elektronik ist in Fig. 1 nur schematisch gezeigt. Die Impulslänge ist ebenfalls einstellbar und wird durch einen Quarzgenerator stabilisiert. Sie kann programmgesteuert während der Messungen zwischen mehreren festen Werten variiert werden. Eine weitere Steuereinrichtung erlaubt es, die an der Diode während des Impulses anliegende Spannung regelmäßig automatisch im Abstand von jeweils einigen Sekunden zwischen zwei vorwählbaren stabilisierten Werten $U_{P1}$ und $U_{P2}$ umzuschalten.

Die Formen der jeweils an der Diode anliegenden Impulse sind schematisch in Fig. 2, 3a und 3b dargestellt, die unten näher erläutert werden.

Zur Kontrolle der Funktion des Systems ist eine radioaktive $^{137}$Cs-Quelle am NaI(T1)-Szintillator befestigt, die im Szintillationsdetektor entsprechende Signale erzeugt. Die gesamte Anordnung einschließlich Elektronik befindet sich in einem Klimaschrank, dessen Innentemperatur programmgesteuert verändert oder konstant gehalten werden kann.

Für die im folgenden beschriebenen Messungen wurde exemplarisch eine LED mit einem Maximum des Wellenlängenspektrums im blauen Bereich, nämlich bei etwa 430 nm verwendet, was etwa der spektralen Verteilung des Emissionslichtes eines NaI(T1) Szintillationskristalls entspricht.

Es ist bekannt, dass die mittlere von der LED emittierte Lichtmenge bei ansonsten konstanten Betriebsbedingungen von deren Temperatur abhängt. Die entsprechende Temperaturabhängigkeit wurde mit Hilfe dieser Anordnung folgendermaßen gemessen:

- Klimaschrank auf konstanter Temperatur halten
- Temperatur $T_{LED}$ der LED mit Hilfe des Peltier-Elements erhöhen oder senken
- Temperatur $T_{LED}$ der LED mit Hilfe eines Temperatursensors messen und warten, bis $T_{LED}$ konstant bleibt
- Impulshöhenspektrum im gewählten Messregime aufzeichnen und analysieren

Fig. 4 zeigt beispielhaft ein gemessenes Impulshöhenspektrum. Während der Messung wurde $U_P$ regelmäßig zwischen den Werten $U_{P1}$ und $U_{P2}$ umgeschaltet, die Impulslänge tp wurde regelmäßig zwischen den Werten $t_{PS}$ und $t_{PL}$ umgeschaltet. Jede Kombination von $U_P$ und $t_P$ erzeugt einen Peak im Spektrum, dessen Lage ein Maß für die von der Diode im Mittel emittierte und im Detektor nachgewiesene Lichtmenge $L(U_P, t_P)$ ist. Im linken Teil der Grafik ist zusätzlich das von der $^{137}$Cs-Quelle im Szintillationsdetektor erzeugte Impulshöhenspektrum zu erkennen. In den folgenden Grafiken und Formeln ist L mit der Lage des entsprechenden Peaks wegen der festen Beziehung der beiden Größen zueinander gleichgesetzt.

Fig. 5 zeigt die gemessene Abhängigkeit der emittierten Lichtmenge L von der Temperatur $T_{LED}$ für zwei verschiedene Betriebsregimes, die durch gleiche Impulslänge aber unterschiedliche Spannungswerte $U_{P1}$ und $U_{P2}$ gekennzeichnet sind. Die Variation der Lichtmenge L mit der Temperatur $T_{LED}$ ist deutlich sichtbar. Gezeigt sind auch die Korrekturfaktoren $K(U_{P1}) = L_0/L_1(T_{LED})$ und $K(U_{P2}) = L_0/L_2(T_{LED})$, mit denen die Lichtmengen L und damit die Peaklagen der zu den Impulsen mit den Spannungen $U_{P1}$ und $U_{P2}$ gemessenen Peaks korrigiert werden müssen, um die Temperatur bedingten Veränderungen der Lichtemission der LED zu korrigieren.

Die entsprechenden, an der LED jeweils anliegenden Spannungsimpulse sind schematisch in Fig. 2 gezeigt, in der die beiden Spannungen $U_{P1}$ und $U_{P2}$ sowie die Impulslänge $t_P$ gezeigt sind. Gezeigt sind dort auch die endlichen Signalanstiegs- und Abfallzeiten sowie die Einschwingeffekte beim Anschalten des Signals.

Aus den beiden Peaklagen ist das Verhältnis $R = L(U_{P1})/L(U_{P2})$ bestimmbar. Auf Grund von Nichtlinearitäten der Kennlinie der LED ist dieses Verhältnis nicht konstant, sondern ändert sich, wie in Fig. 6 gezeigt, mit der Temperatur $T_{LED}$. Die so bestimmte Größe R hängt nicht von der Verstärkung des Lichtdetektors ab, solange die Detektorsignale proportional zur detektierten Lichtmenge L sind. Diese Proportionalität (Linearität der Detektor-Response) ist tatsächlich gegeben und wurde in gesonderten Messungen nachgewiesen.

Damit kann R mit einem unstabilisierten Detektor mit unbekannter Verstärkung gemessen werden. Aus R kann dann die Temperatur $T_{LED}$ mittels der Kalibrierkurve (Fig. 6) der Dioden bestimmt werden.

Aus $T_{LED}$ lässt sich mit den Abhängigkeiten $L(T_{LED})$ für jedes Betriebsregime ein temperaturabhängiger Faktor $K = L_0/L(T_{LED})$ bestimmen, der die im Detektor gemessene absolute Lichtmenge L um Temperatur bedingte Schwankungen korrigieren kann (Fig. 5). $L_0$ ist hierbei die entsprechende Peaklage bei einer Referenztemperatur $T_0$. Die LED wird durch die Kenntnis des Korrekturfaktors K trotz Änderung der Temperatur $T_{LED}$) zum Eichnormal für die Stabilisierung der Verstärkung des Lichtdetektors. Die Verstärkung des Lichtdetektors (Fotomultiplier) kann mit Hilfe dieser Werte entweder geregelt oder rechnerisch so korrigiert werden, dass die aktuell gemessene LED-Peaklage, zum Beispiel für $U_{P1}$ und $t_{P1}$, korrigiert mit dem entsprechenden Korrekturfaktor K, auf die Sollposition geschoben wird. Dadurch wird gesichert, dass das von einer bestimmten definierten Lichtmenge erzeugte Detektorsignal stets einen Peak an einer gleich bleibenden Stelle im Spektrum erzeugt - die Verstärkung des Lichtdetektors ist stabilisiert.

R ist somit ein geeigneter Parameter X im oben genannten Sinne, der aus Signalen des Lichtdetektors abgeleitet wird, die unterschiedlichen Betriebsweisen der LED entsprechen, und eine Bestimmung der Temperatur der LED oder einer Korrektur der Temperaturabhängigkeit der emittierten Lichtmenge gestattet.

In Fig. 7 sind die absoluten Peaklagen L und die entsprechenden Korrekturfaktoren K für zwei verschiedene Betriebsregimes als Funktion des - jeweils aus dem gleichen Impulshöhenspektrum bestimmten - Parameters, R dargestellt. Die Grafik zeigt, dass man auf die Bestimmung der Temperatur $T_{LED}$ verzichten und stattdessen den entscheidenden Korrekturfaktor K direkt mit dem Verhältnis R in Beziehung setzen und dann aus dem jeweils aktuell gemessenen R bestimmen kann.

In der beschriebenen Anordnung wird die LED mit Impulsen konstanter Spannung betrieben. Ebenso gut möglich ist es, die Diode mit Impulsen konstanter Stromstärke zu betreiben und dann die resultierenden Peaklagen zu messen. Die Größen Ip und Up sind über die Diodenkennlinie der jeweils verwendeten LED eindeutig miteinander verknüpft. Zwar haben die entsprechenden Abhängigkeiten der Peaklagen L und der Peaklagenverhältnisse R von der Temperatur $T_{LED}$ eine andere Form, sie können aber in gleicher Weise für die Bestimmung einer Korrektur K, die die Temperaturabhängigkeit der Lichtemission L der Diode korrigiert, genutzt werden.

Obwohl die Bildung der Lichtmengenverhältnisse bereits dafür sorgt, dass Verstärkungsdriften des Lichtdetektors keinen Einfluss auf die Bestimmung des Korrekturfaktors R haben, können doch Ein- oder Ausschaltvorgänge die Lichtemission der LED und deren Temperaturabhängigkeit in unerwünschter Weise beeinflussen. Diese Effekte lassen sich mit einer weiteren Ausführungsform zusätzlich reduzieren, die auf der Messung von mehr als zwei Impulsen beruht.

Im Folgenden konkret beschrieben ist eine Ausführungsform, bei der, wie in Fig. 4 gezeigt, vier Impulse gemessen werden, und zwar jeweils zwei Impulse bei konstanter Spannung $U_{P1}$ und verschiedenen Impulsdauern $t_{PS}$ und $t_{PL}$ sowie zwei Impulse bei ebenfalls konstanter Spannung $U_{P2}$ und ebenfalls wiederum verschiedenen Impulsdauern $t_{PS}$ und $t_{PL}$. Es können jedoch auch eine größere Anzahl von Impulsen gemessen und ausgewertet werden, um die Genauigkeit weiter zu erhöhen.

Fig. 3a zeigt schematisch den Spannungsverlauf zweier Impulse mit verschiedenen Impulsdauern $t_{PS}$ und $t_{PL}$ bei ansonsten gleichen Randbedingungen, insbesondere bei gleicher Diodenspannung $U_{P1}$. Da die Spannungen $U_{P1}$ der beiden Impulse identisch sind, sind auch die Einschwingzeiten sowie die Anstiegszeiten der Impulse im wesentlichen identisch. Bildet man nun die Lichtmengendifferenzen $L_D = L(U_{P1}; t_{PL}) - L(U_{P1}; t_{PS})$ der beiden Impulse mit konstanten Randbedingungen aber verschiedenen Impulsdauern, werden im Ergebnis die identischen Dioden-typischen Parameter voneinander abgezogen und unterdrückt, so dass die Lichtmengendifferenz im wesentlichen einer Fläche aus dem Plateaubereich des Impulses entspricht und damit sehr genau bestimmbar ist. Dies ist schematisch in Fig. 3b gezeigt.

Diese Lichtmengendifferenz wird nun in der beschriebenen Art und Weise für zwei verschiedene Spannungen $U_{P1}$ und $U_{P2}$ gebildet und anschließend das Lichtmengenverhältnis von $L_{D1}$ zu $L_{D2}$ bestimmt. Dieses Lichtmengenverhältnis ist besonders gut geeignet als Parameter X zu dienen, aus dem der Korrekturfaktor K bestimmt wird:

$$K = f(X)$$

bei

$$X = \frac{L_{D1}}{L_{D2}} = \frac{L(U_{P1};t_{PL}) - L(U_{P1};t_{PS})}{L(U_{P2};t_{PL}) - L(U_{P2};t_{PS})}$$

Das Ergebnis von Messungen des Verhältnisses der Lichtmengendifferenzen für zwei verschiedene Spannungen und Impulslängen zeigt, dass dieser Parameter sehr gut mit der Temperatur $T_{LED}$ korreliert ist (Fig. 8)

Selbstverständlich kann auch hier die Variation der Lichtmenge nicht nur über die Spannung $U_P$, sondern ebenfalls über eine Variation des Diodenstroms $I_P$ erfolgen.

Zur Messung der Lichtmengen wurde im vorliegenden Beispiel ein Fotomultiplier eingesetzt, wobei es ebenso gut möglich ist, eine Fotodiode oder eine andere Form des Lichtdetektors zu verwenden. '

Wie Fig. 6 und Fig. 8 zeigen, ist die Abhängigkeit des Parameters X von der Diodentemperatur T in der Regel nicht linear. Die elektronische Bestimmung des Korrekturfaktors K lässt sich daher weiter vereinfachen, wenn man die LED mit einem Vorwiderstand betreibt und bevorzugt diesen Vorwiderstand so auswählt, dass dieser ebenfalls ein nicht lineares Verhalten gegenüber Temperaturänderungen aufweist Wählt man die Parameter dabei so, dass die Nicht-Linearität des Vorwiderstandes im jeweilig interessierenden Temperaturbereich die Nicht-Linearität des Parameters X annähernd kompensiert, dann erhält man letztlich eine im interessierenden Temperaturbereich annähernd lineare Abhängigkeit des Korrekturfaktors K von der Diodentemperatur T, was die Auswertung und Korrekturen der Messergebnisse erheblich vereinfacht.

In der praktischen Anwendung sind die entsprechenden Abhängigkeiten im Vorfeld zu bestimmen, d.h. in der Regel zu messen, so dass eine für die konkret eingesetzte LED gültige Kennlinie erzeugt wird. Diese kann dann in Form einer Korrekturtabelle oder auch einer geschlossenen Funktion gespeichert werden, so dass eine Korrektur der Messung sogar in Echtzeit während der Messung selbst erfolgen kann.

Für eine ausreichende Stabilisierung genügt es, wenn die Parameter X und K in Zeitabständen bestimmt werden, die kleiner sind, als die Zeiten, in denen eine relevante Temperaturänderung der LED stattfindet. Es ist dabei ersichtlich, dass die Temperatur $T_{LED}$ der LED für die Korrektur der gemessenen Lichtmenge nicht explizit bekannt sein muss, da die Korrektur anhand der Signale selbst erfolgt. Dennoch ist deutlich, dass die Temperatur $T_{LED}$ der LED mit diesem Verfahren ebenfalls bestimmt werden kann, wobei die Bestimmung des Korrekturfaktors K dann als abgeleitete Größe auch aus der Diodentemperatur $T_{LED}$ bestimmt werden kann. Gleichzeitig kann in derartigen Fällen die Messung der Diodentemperatur $T_{LED}$ auch für andere Zwecke verwendet werden.

Derartige Tgmperaturmessungen mit der LED können etwa für die Kalibrierung eines Szintillationsdetektors verwendet werden. Ein derartiger Szintillationsdetektor besteht üblicherweise aus einem Szintillator in fester, kristallförmiger oder flüssiger Form, sowie einem Lichtdetektor. Die Eigenschaften des Lichtdetektors, meist einer Fotokathode mit Fotomultiplier oder Fotodiode, hängen von der Temperatur von Fotokathode und insbesondere Fotomultiplier ab. Strahlt man eine konstante Lichtmenge L in den Lichtdetektor ein, kann das Ausgangssignal des Lichtdetektors kalibriert werden, um so temperaturbedingte Schwankungen auszugleichen. Es ist dabei nicht unbedingt erforderlich, dass die eingestrahlte Lichtmenge konstant ist, sondern es genügt, wenn diese bekannt ist.

Verwendet man eine am oder im Szintillator oder sonst in Sichtweite des Lichtdetektors angebrachte LED, deren emittierte Lichtmenge nach einem der oben beschriebenen Verfahren auf die Temperatur korrigiert und daher bekannt ist, kann mit einer derartigen LED der gesamte Lichtdetektor kalibriert werden, wobei dies online während der Messung geschehen kann. Aus den oben erläuterten Gründen ist es zwar möglich, die Temperatur T des Systems zu messen, allerdings nicht erforderlich, da die Auswertung der Signalgröße für die Kalibrierung genügt.

Koppelt man die verwendete LED einschließlich Lichtdetektor so mit dem Szintillator, dass die Temperatur der LED im Wesentlichen der des Szintillators entspricht, ist es darüber hinaus möglich, eine Stabilisierung des gesamten Systems gegenüber temperaturabhängigen Änderungen der Systemverstärkung mit Hilfe der LED zu erreichen.

Es ist bekannt, dass auch die Lichtemission eines Szintillators von der Temperatur T abhängt. Kennt man die Temperatur des Szintillators, etwa über die Auswertung der von der LED ausgesandten Signale nach einem der oben beschriebenen Verfahren, kann die von der Temperatur abhängige Lichtausbeute des Szintillators, ebenso wie die Abhängigkeit des Lichtdetektors von der Temperatur während der Messung berücksichtigt werden, so dass eine Kalibrierung des Gesamtsystems über die Auswertung der von der LED ausgesandten Signale möglich ist. Da die Lichtausbeute des Szintillators ansonsten im Wesentlichen der Energie der dort absorbierten Strahlung entspricht, kann damit eine Energieeichung des gesamten Detektorsystems über die Signalauswertung der von der LED ausgelösten Signale am Ende des Lichtdetektors erfolgen, ohne dass die Verwendung etwa einer radioaktiven Eichquelle zur Eichung des Detektorsystems erforderlich wäre.

## Patentansprüche

1. Verfahren zur Korrektur der Temperaturabhängigkeit der von einer Licht aussendenden Diode (LED), die im Impulsbetrieb mit im wesentlichen konstanter Impulsdauer $t_P$ betrieben wird, emittierten und in einem Lichtdetektor gemessenen Lichtmenge L unter Verwendung eines vorbestimmten, zu der Temperatur T der LED in einem vorbestimmten Verhältnis stehenden Parameters X, wobei ein Korrekturfaktor K aus dem Parameter X bestimmt wird, vorzugsweise unter Verwendung einer Kalibriertabelle, besonders bevorzugt unter Verwendung einer geschlossenen, vorbestimmten Funktion, mit dem die gemessene emittierte Lichtmenge L um die Temperatur bedingten Schwankungen der emittierten Lichtmenge korrigiert wird, wobei der Parameter X wie folgt bestimmt wird:

   • Betreiben der LED im Impulsbetrieb, so dass die Impulsdauer $t_P$ im wesentlichen konstant ist und entweder die Spannung an der LED zwischen einer ersten Spannung $U_{P1}$ und einer zweiten Spannung $U_{P2}$ wechselt, oder der durch die LED fließende Strom zwischen einem ersten Wert $I_{P1}$ und einem zweiten Wert $I_{P2}$ wechselt,
   • Messen der mittleren Lichtmengen $L(U_P)$ der Impulse mit den Spannungen $U_{P1}$ und $U_{P2}$ oder der mittleren Lichtmengen $L(I_P)$ der Impulse mit den Strömen $I_{P1}$ und $I_{P2}$,

- Bilden des Verhältnisses der so erhaltenen Lichtmengen $L(U_{P1})$ und $L(U_{P2})$ bzw. $L(I_{P1})$ und $L(I_{P2})$,

und wobei der Korrekturfaktor K aus der bekannten Temperaturabhängigkeit dieses Verhältnisses gebildet wird.

**2.** Verfahren zur Korrektur der Temperaturabhängigkeit der von einer Licht aussendenden Diode (LED), die im Impulsbetrieb mit im wesentlichen konstanter Impulsdauer $t_P$ betrieben wird, emittierten und in einem Lichtdetektor gemessenen Lichtmenge L unter Verwendung eines vorbestimmten, zu der Temperatur T der LED in einem vorbestimmten Verhältnis stehenden Parameters X, wobei ein Korrekturfaktor K aus dem Parameter X bestimmt wird, vorzugsweise unter Verwendung einer Kalibriertabelle, besonders bevorzugt unter Verwendung einer geschlossenen, vorbestimmten Funktion, mit dem die gemessene emittierte Lichtmenge L um die Temperatur bedingten Schwankungen der emittierten Lichtmenge korrigiert wird, wobei der Parameter X wie folgt bestimmt wird:

- Betreiben der LED im Impulsbetrieb, so dass die Impulsdauer $t_P$ im wesentlichen zwei unterschiedliche, im wesentlichen konstante, Werte $t_{PS}$ und $t_{PL}$ annimmt und die Spannung an der oder der Strom durch die LED zwischen einer ersten Spannung $U_{P1}$ und einer zweiten Spannung $U_{P2}$ bzw. zwischen einem ersten Strom $I_{P1}$ und einem zweiten Strom $I_{P2}$ wechselt,
- Messen der mittleren Lichtmengen $L(U_P;t_{PS})$ bzw. $L(I_P;t_{PS})$ und $L(U_P;t_{PL})$ bzw. $L(I_P;t_{PL})$ der Impulse mit den Spannungen $U_{P1}$ und $U_{P2}$ bzw. den Strömen $I_{P1}$ und $I_{P2}$ und den Impulsdauern $t_{PS}$ und $t_{PL}$,
- Bestimmung mindestens der Differenzen $D_{P1}$ und $D_{P2}$ der Lichtmengen $L(U_{P1};t_{PL})$ und $L(U_{P1};t_{PS})$, bzw. $L(I_{P1;}t_{PL})$ und $L(I_{P1;PS})$ sowie $L(_{UP2};t_{PL})$ und $L(U_{P2};t_{PS})$, bzw. $L(I_{P2};t_{PL})$ und $L(I_{P2};t_{PS})$ und
- Bilden des Verhältnisses der so erhaltenen Lichtmengendifferenzen $D_{P1}$ und $D_{P2}$,

und wobei der Korrekturfaktor K aus der bekannten Temperaturabhängigkeit dieses Verhältnisses gebildet wird.

**3.** Verfahren nach einem der vorhergehenden Ansprüche, wobei die Lichtmengen $L(U_P)$ und $L(I_P)$ mit einem Lichtdetektor, bevorzugt einem Fotomultiplier, einem Hybrid-Fotomultiplier, einer Avalanche-Fotodiode oder einer Fotodiode mit Verstärker, bestimmt werden.

**4.** Verfahren nach dem vorhergehenden Anspruch, bei dem die von dem Lichtdetektor gemessenen Lichtmengen durch einen oder mehrere der folgenden Verfahrensschritte bestimmt werden:

- Durchführung einer Impulshöhenspektrometrie der Detektorsignale,
- Messung des mittleren Stromflusses im Lichtdetektor,
- Messung der in der fotoempfindlichen Schicht des Lichtdetektors durch den LED-Impuls erzeugten Ladungsmenge, bevorzugt durch Spektrometrie der, bevorzugt bereits verstärkten, durch die LED Impulse ausgelösten Ladungssignale.

**5.** Verfahren nach einem der vorgenannten Ansprüche, wobei die LED einen Vorwiderstand umfasst, wobei der Vorwiderstand so gewählt wird, dass sein Widerstand nichtlinear von der Temperatur T abhängt, bevorzugt in einer Weise, so dass die Abhängigkeit oder zumindest die Nichtlinearität der Abhängigkeit des Korrekturfaktors K von der Temperatur T annähernd durch die Temperaturabhängigkeit des Vorwiderstandes kompensiert wird.

**6.** Verfahren zur Stabilisierung der von einem Szintillationsdetektor zur Messung von Strahlung, bevorzugt ionisierender Strahlung, durch die im Detektor zumindest teilweise absorbierte Strahlung erzeugten und von der Betriebstemperatur des Detektors abhängigen Signale, wobei der Szintillationsdetektor mindestens einen Lichtdetektor und mindestens eine mit diesem optisch verbundene LED aufweist, wobei der Stabilisierungsfaktor zur Stabilisierung des Szintillationsdetektors aus den von mindestens einer LED emittierten Signalen erzeugt wird und bei dem die Temperaturabhängigkeit der Lichtemission mindestens einer LED mit einem Verfahren nach einem der vorgenannten Ansprüche korrigiert wird.

**7.** Verfahren nach dem vorhergehenden Anspruch, bei dem mindestens eine LED Wärme leitend mit dem Szintillator verbunden ist.

**8.** Verfahren nach einem der vorhergehenden Ansprüche, bei dem die Signalverarbeitung digital erfolgt.

**9.** Lichtdetektor, bevorzugt ein Fotomultiplier, ein Hybrid-Fotomultiplier, eine Avalanche-Fotodiode oder eine Fotodiode mit Verstärker, mit Signalverarbeitungsvorrichtung, wobei mindestens eine LED mit dem Lichtdetektor optisch verbunden ist, bei dem mindestens eine LED im Impulsbetrieb betrieben wird und die Ausgangssignale des Lichtdetektors mit einem Stabilisierungsfaktor stabilisiert werden, wobei der Stabilisierungsfaktor aus den von mindestens einer LED emittierten Signalen erzeugt wird und bei dem die Temperaturabhängigkeit der von dem Lichtdetektor gemessenen Lichtemission mindestens einer LED mit einem Verfahren nach einem der Ansprüche 1 bis 8 korrigiert wird.

**10.** Lichtdetektor nach dem vorhergehenden Anspruch, bei dem die Signalverarbeitung digital erfolgt.

**11.** Szintillationsdetektor zur Messung von Strahlung, bevorzugt ionisierender Strahlung, wobei der Szintillationsdetektor mindestens einen Lichtdetektor nach einem der Ansprüche 9 oder 10 aufweist, der das vom Szintillationsdetektor erzeugte Licht zumindest teilweise misst.

**12.** Szintillationsdetektor nach dem vorhergehenden Anspruch, wobei die durch die im Detektor zumindest teilweise absorbierte Strahlung erzeugten und von der Betriebstemperatur des Detektors abhängigen Signale gemessen und mit einem zur Temperatur T des Szintillators in einem vorbestimmten Verhältnis stehenden Stabilisierungsfaktor S stabilisiert werden, wobei mindestens eine LED des Lichtdetektors mit dem Szintillationsdetektor Wärme leitend verbunden ist und wobei der Temperatur abhängige Stabilisierungsfaktor S zur Stabilisierung des Szintillationsdetektors auf vorbestimmte Weise, bevorzugt unter Verwendung einer Kalibrierungstabelle, besonders bevorzugt unter Verwendung einer vorbestimmten funktionalen Abhängigkeit, aus dem Parameter X mindestens einer Wärme leitend mit dem Szintillationsdetektor verbundenen LED nach einem der vorhergehenden Ansprüche 1 bis 8 bestimmt wird.

## Claims

**1.** A method for the correction of the temperature dependency of a light quantity L emitted by a light emitting diode (LED), which is operated in pulsed mode with substantially constant pulse duration $t_P$, and is measured in a light detector, using a predetermined parameter X related to the temperature T of the LED in a predetermined relation, wherein a correction factor K is determined from the parameter X, preferably using a calibration table, particularly preferred using an analytic predetermined function, according to which the measured emitted light quantity L is corrected for the temperature contingent fluctuations of the emitted light quantity, wherein the parameter X is determined as follows:

- Operating the LED in pulsed mode such that the pulse duration $t_P$ substantially remains constant and either the voltage at the LED alternates between a first voltage $U_{P1}$ and a second voltage $U_{P2}$ or the current flowing through the LED alternates between a first value $I_{P1}$ and a second value $I_{P2}$,
- measuring the average light quantities $L(U_P)$ of the pulses with the voltages $U_{P1}$ and $U_{P2}$ or the average light quantities $L(I_P)$ of the pulses with the currents $I_{P1}$ and $I_{P2}$,
- determining the ratio of the light quantities $L(U_{P1})$ and $L(U_{P2})$ or $L(I_{P1})$ and $L(I_{P2})$ determined by this,

and wherein the correction factor K is determined from the known temperature dependency of this ratio.

**2.** A method for the correction of the temperature dependency of a light quantity L emitted by a light emitting diode (LED), which is operated in pulsed mode with substantially constant pulse duration tp, and is measured in a light detector, using a predetermined parameter X related to the temperature of the LED in a predetermined relation, wherein a correction factor K is determined from the parameter X, preferably using a calibration table, particularly preferred using an analytic predetermined function, according to which the measured emitted light quantity L is corrected for the temperature contingent fluctuations of the emitted light quantity, wherein the parameter X is determined as follows.

- Operating the LED in pulsed mode such that the pulse duration tp substantially takes two different, substantially constant, values $t_{PS}$ and $t_{PL}$, and the voltage at the LED or the current flowing through the LED alternates between a first voltage $U_{P1}$ and a second voltage $U_{P2}$ or between a first current $I_{P1}$ and a second current $I_{P2}$,
- measuring the average light quantities $L(U_P;t_{PS})$ or $L(I_P;t_{PS})$ and $L(U_P;t_{PL})$ or $L(I_P;t_{PL})$ of the pulses with the voltages $U_{P1}$ and $U_{P2}$ or the currents $I_{P1}$ and $I_{P2}$ and the pulse durations $t_{PS}$ and $t_{PL}$,
- determining at least the differences $D_{P1}$ and $D_{P2}$ of the light quantities $L(U_{P1};t_{PL})$ and $L(U_{P1};t_{PS})$ or $L(I_{P1};t_{PL})$ and $L(I_{P1};t_{PS})$ as well as $L(U_{P2};t_{PL})$ and $L(U_{P2};t_{PS})$ or $L(I_{P2};t_{PL})$ and $L(I_{P2};t_{PS})$ and
- determining the ratio of the differences of the light quantities $D_{P1}$ and $D_{P2}$ determined by this,

and wherein the correction factor K is determined from the known temperature dependency of this ratio.

3. A method according to one of the preceding claims, wherein the light quantities L(Up) and L($I_P$) are determined with a light detector, preferably a photo multiplier, a hybrid photo multiplier, an Avalanche photo diode or a photo diode with amplifier.

4. A method according to the preceding claim, wherein the light quantities measured by the light detector are determined by one or more of the following process steps:

   • Carrying out a pulse amplitude spectrometry of the detector signals,
   • measuring the average current flow in the light detector,
   • measuring the charge quantity of the LED pulse generated in the photosensitive layer of the light detector, preferably by means of spectrometry of the preferably already amplified charge signals triggered by the LED pulse.

5. A method according to one of the preceding claims, wherein the LED comprises a series resistance, wherein the series resistance is selected such that its resistance depends on the temperature T in a non-linear manner, preferably in a manner such that the dependency or at least the non-linearity of the dependency of the correction factor K from the temperature T is compensated for approximately by the temperature dependency of the series resistance.

6. A method for the stabilization of the signals generated by a scintillation detector for measuring radiation, preferably ionized radiation, by the radiation absorbed at least partially in the detector, and depending on the operating temperature of the detector, wherein the scintillation detector comprises at least one light detector and at least one LED optically connected to the latter, wherein the stabilization factor for stabilizing the scintillation detector is generated from the signals emitted by the at least one LED, and wherein the temperature dependency of the light emission of at least one LED is corrected by means of a method according to one of the preceding claims.

7. A method according to the preceding claim, wherein at least one LED is connected to the scintillator in a heat conducting manner.

8. A method according to one of the preceding claims, wherein the signal processing is carried out digitally.

9. A light detector, preferably a photo multiplier, a hybrid photo multiplier, an Avalanche photo diode or a photo diode with amplifier, with signal processing device, wherein at least one LED is optically connected to the light detector, wherein at least one LED is operated in pulse mode, and the output signals of the light detector are stabilized with a stabilizing factor, wherein the stabilizing factor is generated by signals emitted by the at least one LED, and wherein the temperature dependency of the light emission of the at least one LED is corrected by means of a method according to one of the claims 1 to 8.

10. A light detector according to the preceding claim, wherein the signal processing is carried out digitally.

11. A scintillation detector for measuring radiation, preferably ionized radiation, wherein the scintillation detector comprises at least one light detector according to one of the claims 9 or 10, which at least partially measures the light generated by the scintillation detector.

12. A scintillation detector according to the preceding claim, wherein the signals generated by the radiation absorbed in the detector at least partially and depending on the operating temperature of the detector are measured and are stabilized with a stabilizing factor S related to the temperature T of the scintillator in a predetermined ratio, wherein at least one LED of the light detector is connected to the scintillation detector in a heat conducting manner, and wherein the temperature contingent stabilizing factor S for stabilizing the scintillation detector is determined in a predetermined manner, preferably using a calibration table, particularly preferred using a predetermined functional dependency from the parameter X of at least one LED connected to the scintillation detector in a heat conducting manner according to one of the preceding claims 1 to 8.

**Revendications**

1. Procédé de correction de la dépendance de température de la quantité de lumière L qui est émise par une diode émettrice de lumière (DEL) opérée en mode impulsionnel avec une durée d'impulsion $t_P$ pour l'essentiel constante, et qui est mesurée dans un détecteur de lumière, en utilisant un paramètre X prédéterminé qui est dans un rapport prédéterminé à la température T de la DEL, un facteur de correction K étant déterminé à partir dudit paramètre X, de préférence en utilisant un tableau de calibrage, d'une manière particulièrement préférée en utilisant une fonction fermée prédéterminée, au moyen duquel la quantité de lumière L émise mesurée est corrigée des variations de la quantité de lumière émise, qui sont dues à la température, dans lequel ledit paramètre X est déterminé comme suit :

- opérer la DEL en mode impulsionnel de sorte que la durée d'impulsion tp est pour l'essentiel constante et que, soit, la tension sur ladite DEL varie entre une première tension $U_{P1}$ et une seconde tension $U_{P2}$, soit le courant traversant la DEL varie entre une première valeur $I_{P1}$ et une seconde valeur $I_{P2}$,
- mesurer les quantités moyennes de lumière L(Up) des impulsions avec les tensions $U_{P1}$ et $U_{P2}$ ou les quantités moyennes de lumière L(Ip) des impulsions avec les courants $I_{P1}$ et $I_{P2}$,
- former le rapport des quantités de lumière ainsi obtenues $L(U_{P1})$ et $L(U_{P2})$ respectivement $L(I_{P1})$ et $L(I_{P2})$,

et dans lequel ledit facteur de correction K est formé à partir de la dépendance connue de la température de ce rapport.

**2.** Procédé de correction de la dépendance de température de la quantité de lumière L qui est émise par une diode émettrice de lumière (DEL) opérée en mode impulsionnel avec une durée d'impulsion $t_P$ pour l'essentiel constante, et qui est mesurée dans un détecteur de lumière, en utilisant un paramètre X prédéterminé qui est dans un rapport prédéterminé à la température T de la DEL, un facteur de correction K étant déterminé à partir dudit paramètre X, de préférence en utilisant un tableau de calibrage, d'une manière particulièrement préférée en utilisant une fonction fermée prédéterminée, au moyen duquel la quantité de lumière L émise mesurée est corrigée des variations de la quantité de lumière émise, qui sont dues à la température, dans lequel ledit paramètre X est déterminé comme suit :

- opérer la DEL en mode impulsionnel de sorte que la durée d'impulsion $t_P$ prend pour l'essentiel deux valeurs différentes pour l'essentiel constantes $t_{PS}$ et $t_{PL}$ et que la tension sur ou le courant traversant ladite DEL varie entre une première tension $U_{P1}$ et une seconde tension $U_{P2}$ respectivement entre un premier courant $I_{P1}$ et un second courant $I_{P2}$,
- mesurer les quantités moyennes de lumière $L(U_P\ ;t_{PS})$ respectivement L(Ip ;tps) et $L(U_P\ ;t_{PL})$ respectivement $L(Ip\ ;t_{PL})$ des impulsions avec les tensions $U_{P1}$ et $U_{P2}$ respectivement les courants $I_{P1}$ et $I_{P2}$ et les durées d'impulsion tps et $t_{PL}$,
- déterminer au moins les différences $D_{P1}$ et $D_{P2}$ des quantités de lumière $L(U_{P1}\ ;t_{PL})$ et $L(U_{P1}$ ;tps) respectivement $L(I_{P1},\ ;t_{PL})$ et $L(I_{P1}$ ;tps) ainsi que $L(U_{P2}\ ;t_{PL})$ et $L(U_{P2}\ ;t_{PS})$ respectivement $L(I_{P2}\ ;t_{PL})$ et $L(I_{P2}$ ;tps), et
- former le rapport des différences de quantité de lumière ainsi obtenues $D_{P1}$ et $D_{P2}$,

et dans lequel ledit facteur de correction K est formé à partir de la dépendance connue de la température de ce rapport.

**3.** Procédé selon l'une quelconque des revendications précédentes, dans lequel les quantités de lumière $L(U_P)$ et $L(I_P)$ sont déterminées par le biais d'un détecteur de lumière, de manière préférée d'un photomultiplicateur, d'un photomultiplicateur hybride, d'une photodiode à avalanche ou d'une photodiode avec amplificateur.

**4.** Procédé selon la revendication précédente, dans lequel les quantités de lumière mesurées par le détecteur de lumière sont déterminées par une ou plusieurs des étapes de procédé suivantes :

- mise en oeuvre d'une spectrométrie de hauteur d'impulsion des signaux du détecteur,
- mesure du flux moyen de courant à l'intérieur du détecteur de lumière,
- mesure de la quantité de charge produite par l'impulsion DEL dans la couche photosensible du détecteur de lumière, de préférence par spectrométrie des signaux de charge, de préférence déjà amplifiés, déclenchés par les impulsions DEL.

**5.** Procédé selon l'une quelconque des revendications susmentionnées, dans lequel la DEL comprend une résistance série, ladite résistance série étant choisie de manière à ce que sa résistance dépende de façon non linéaire de la température T, de préférence d'une manière telle que la dépendance ou au moins la non-linéarité de la dépendance du facteur de correction K de la température T est compensée approximativement par la dépendance de la température de la résistance série.

**6.** Procédé de stabilisation des signaux générés par un détecteur à scintillation de mesure de rayonnement, en particulier de rayonnement ionisant, par le rayonnement absorbé au moins en partie dans le détecteur, et dépendant de la température de service du détecteur, ledit détecteur à scintillation comprenant au moins un détecteur de lumière et au moins une DEL reliée optiquement à ce dernier, le facteur de stabilisation pour la stabilisation du détecteur à scintillation étant généré à partir des signaux émis par au moins une DEL et dans lequel la dépendance de la température de l'émission de lumière d'au moins une DEL est corrigée au moyen d'un procédé selon l'une quelconque des revendications susmentionnées.

**7.** Procédé selon la revendication précédente, dans lequel au moins une DEL est reliée de manière thermiquement conductrice au scintillateur.

**8.** Procédé selon l'une quelconque des revendications précédentes, dans lequel le traitement des signaux se fait de manière numérique.

**9.** Détecteur de lumière, de préférence un photomultiplicateur, un photomultiplicateur hybride, une photodiode à avalanche ou une photodiode avec amplificateur, comprenant un dispositif de traitement de signaux, au moins une DEL étant reliée optiquement au détecteur de lumière, dans lequel au moins une DEL est opérée en mode impulsionnel et les signaux de sortie du détecteur de lumière sont stabilisés au moyen d'un facteur de stabilisation, ledit facteur de stabilisation étant généré à partir des signaux émis par au moins une DEL et dans lequel la dépendance de la température de l'émission de lumière d'au moins une DEL, mesurée par ledit détecteur de lumière, est corrigée au moyen d'un procédé selon l'une quelconque des revendications 1 à 8.

**10.** Détecteur de lumière selon la revendication précédente, dans lequel le traitement des signaux se fait de manière numérique.

**11.** Détecteur à scintillation destiné à la mesure de rayonnement, de préférence de rayonnement ionisant, ledit détecteur à scintillation comprenant au moins un détecteur de lumière selon l'une quelconque des revendications 9 ou 10, qui mesure au moins en partie la lumière générée par le détecteur à scintillation.

**12.** Détecteur à scintillation selon la revendication précédente, dans lequel les signaux générés par le rayonnement absorbé au moins en partie dans le détecteur et dépendant de la température de service du détecteur sont mesurés et sont stabilisés par un facteur de stabilisation S qui est dans un rapport prédéterminé à la température T du scintillateur, au moins une DEL du détecteur de lumière étant reliée de manière thermiquement conductrice au détecteur à scintillation et le facteur de stabilisation S dépendant de la température, pour la stabilisation du détecteur à scintillation, étant déterminé de façon prédéterminée, de préférence en utilisant un tableau de calibrage, d'une manière particulièrement préférée en utilisant une dépendance fonctionnelle prédéterminée, à partir du paramètre X d'au moins une DEL selon l'une quelconque des revendications précédentes 1 à 8, qui est reliée de manière thermiquement conductrice au détecteur de scintillation.

# Figur 1

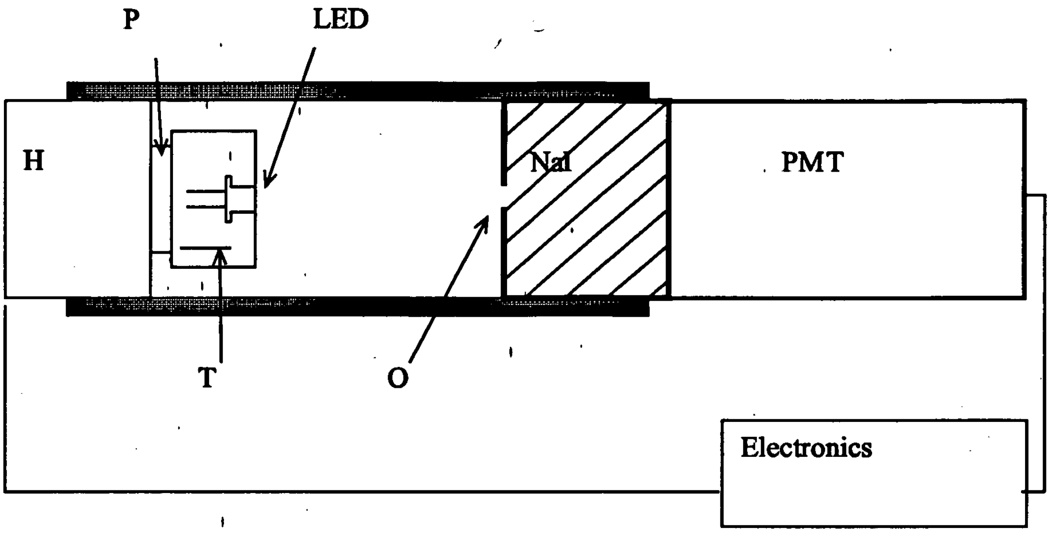


# Figur 2

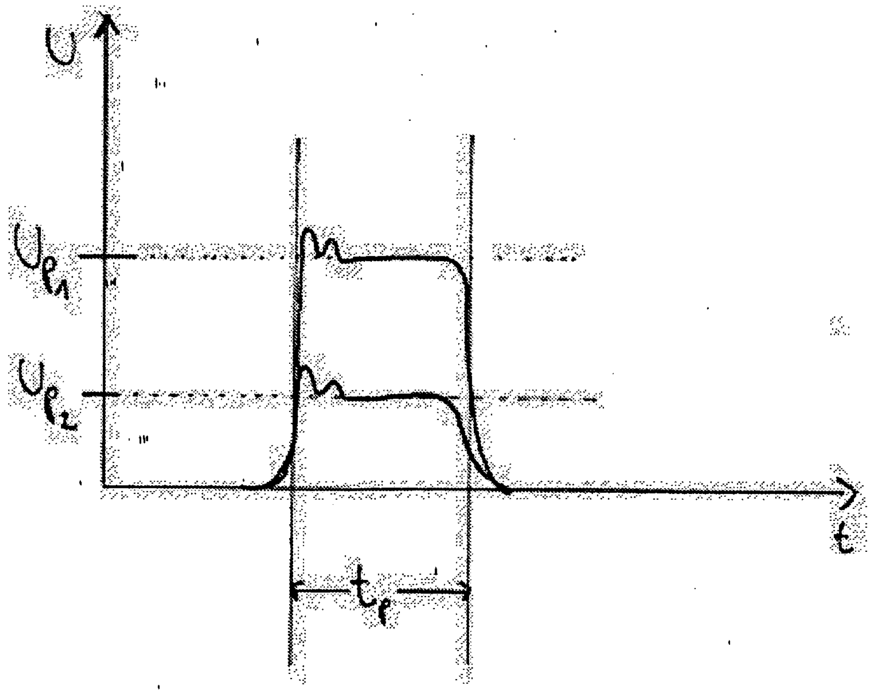

**Figur 3a**

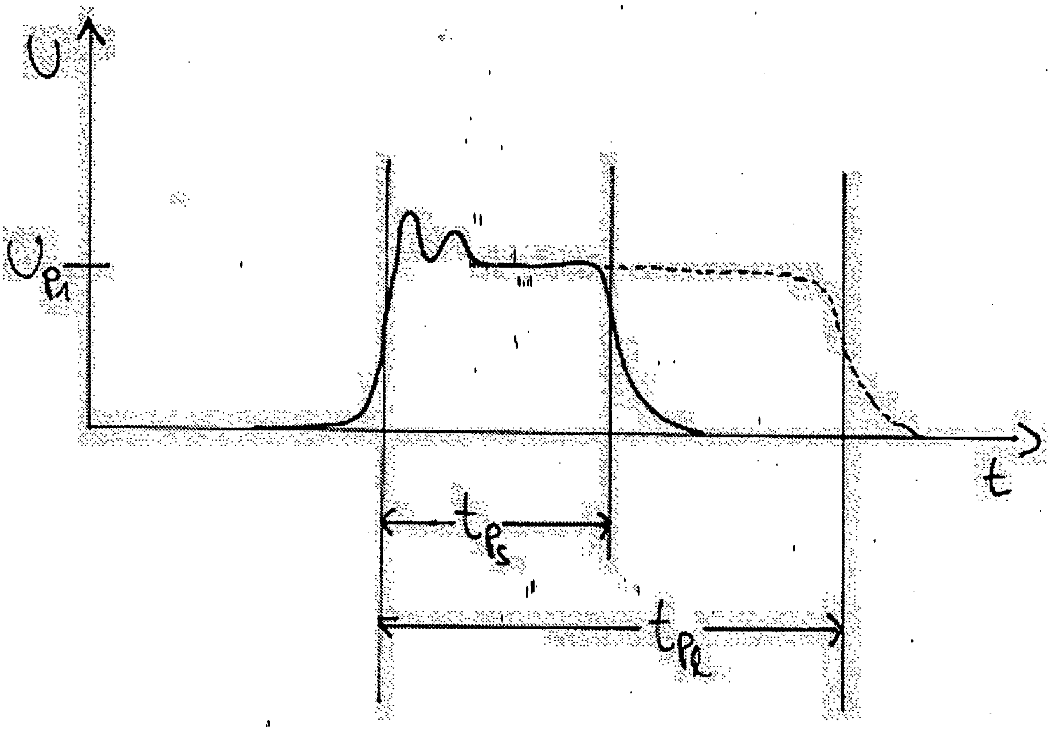


**Figur 3b**

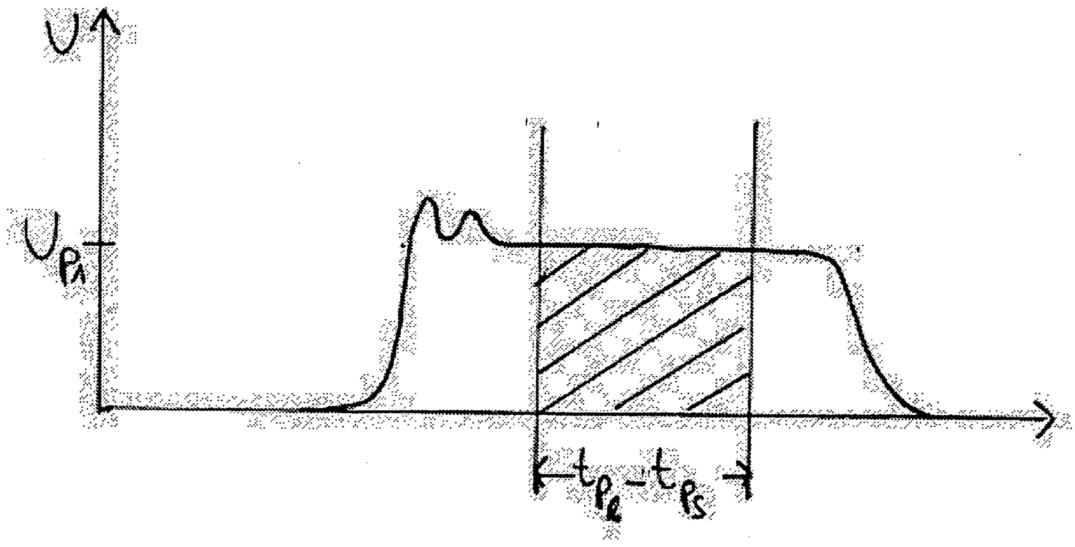

**Figur 4**

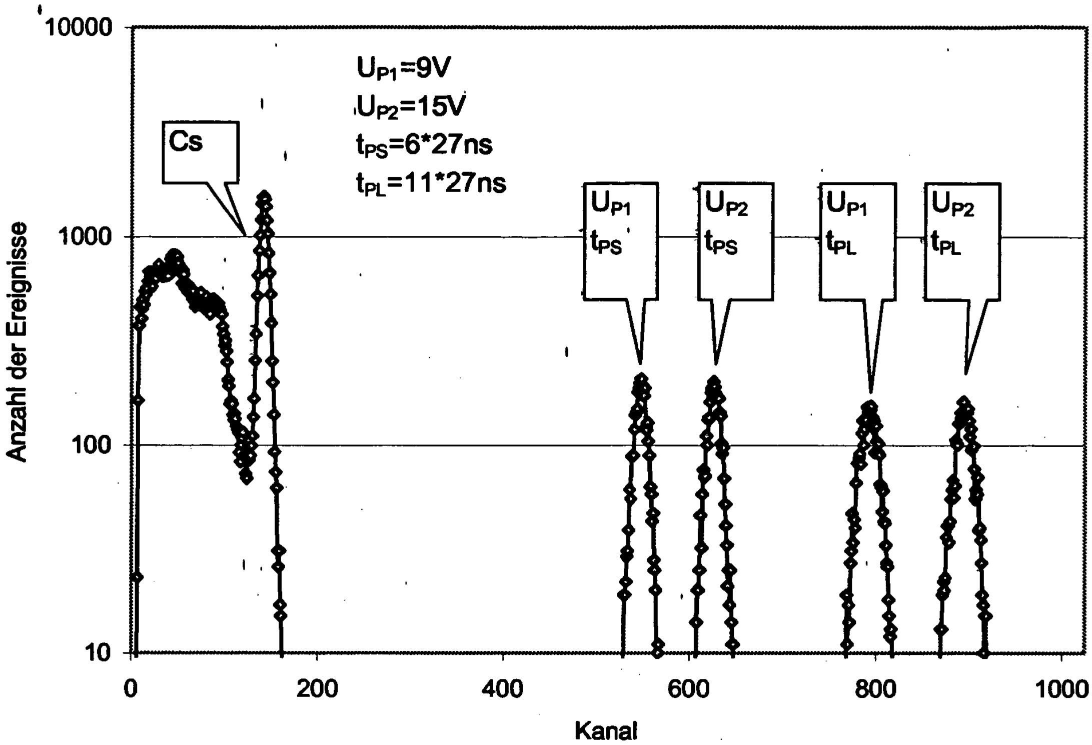
10000
1000
100
10
Anzahl der Ereignisse
0
200
400
600
800
1000
Kanal
Cs
UP1=9V
UP2=15V
tPS=6*27ns
tPL=11*27ns
UP1
tPS
UP2
tPS
UP1
tPL
UP2
tPL

# Figur 5

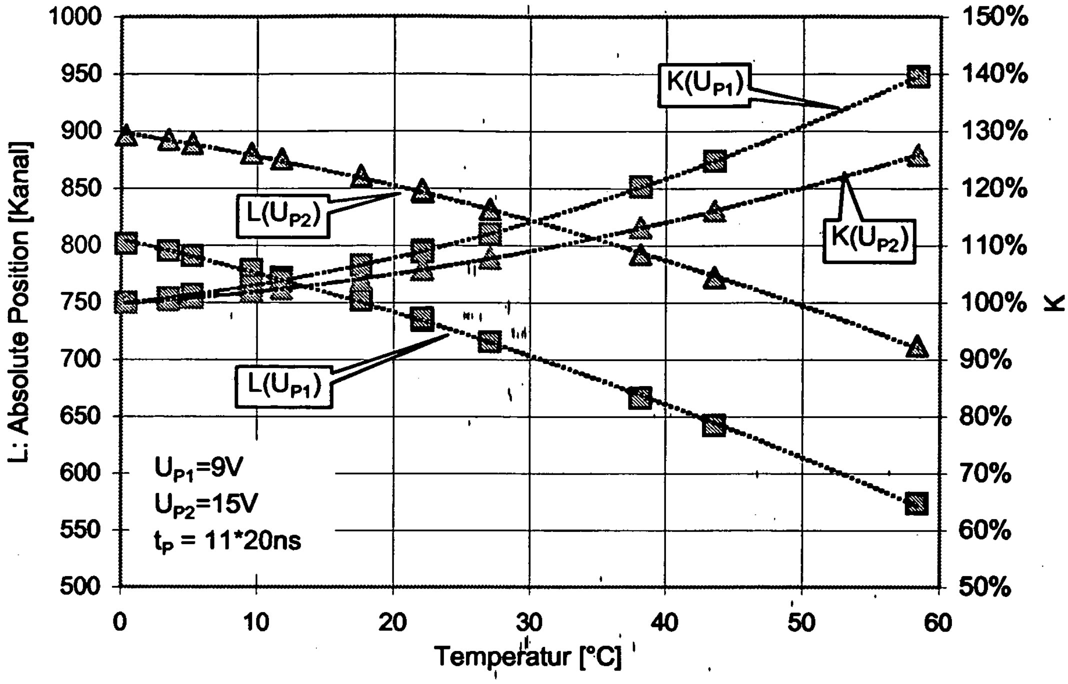


# Figur 6

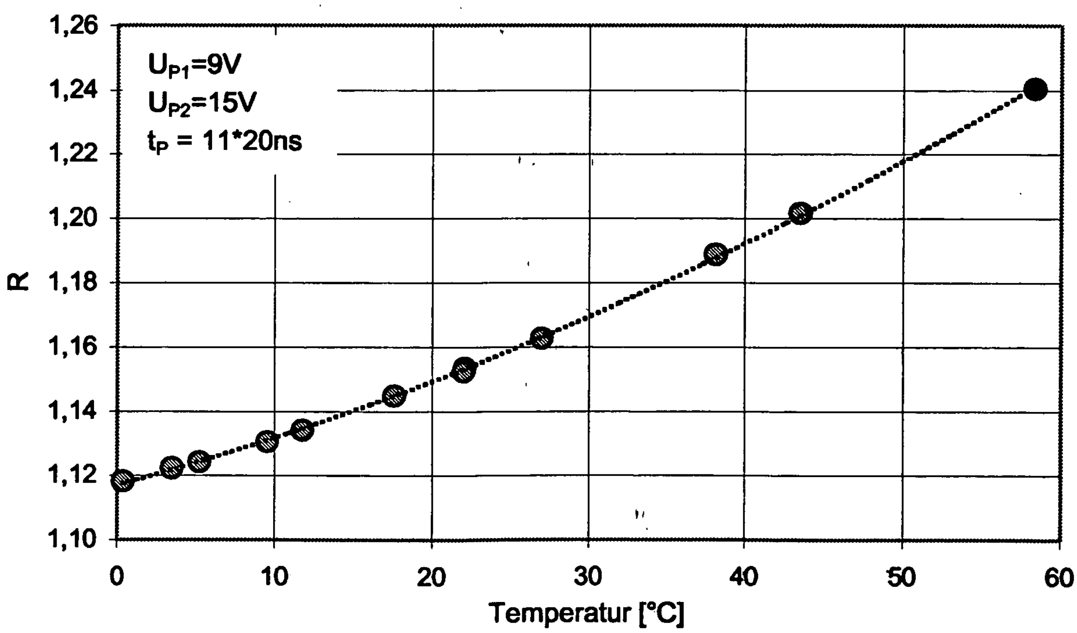

# Figur 7

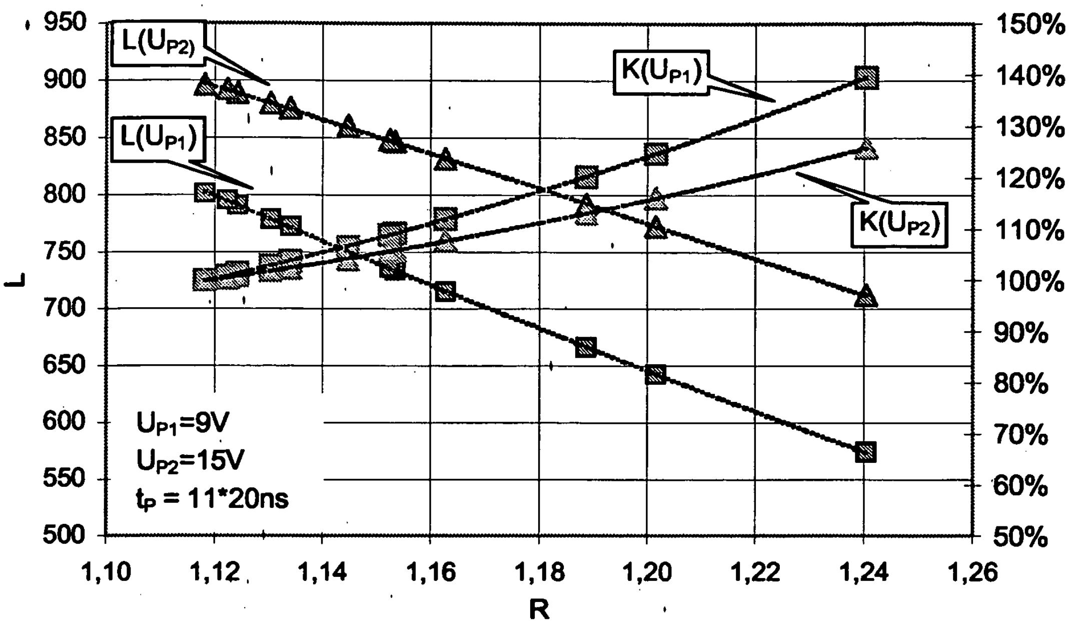


# Figur 8

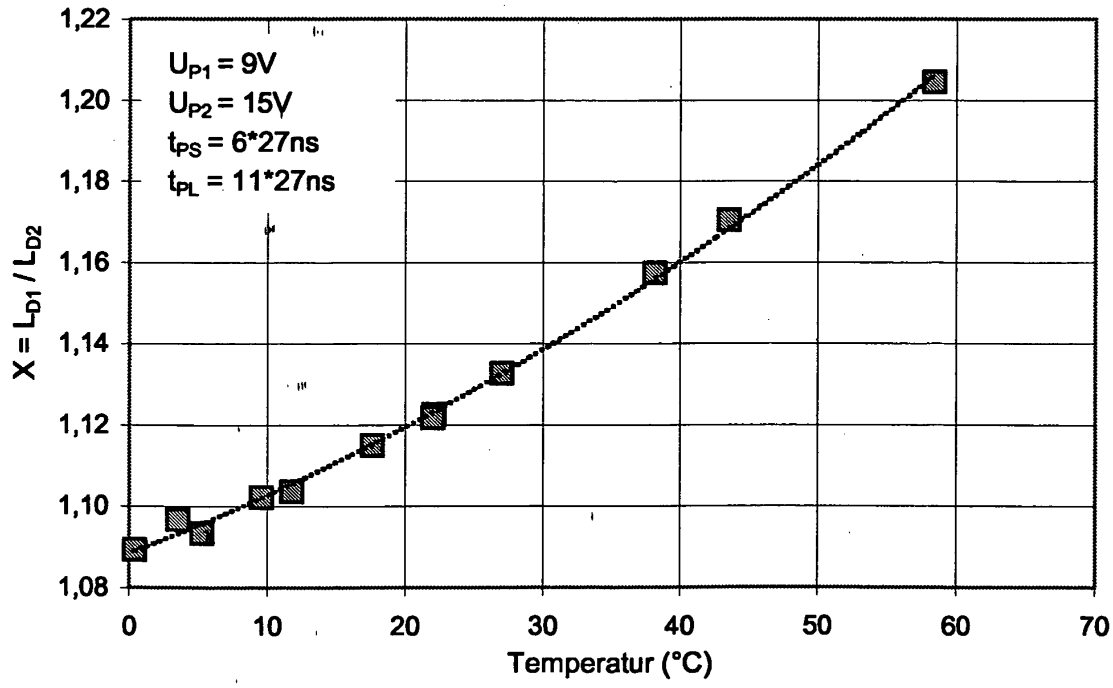

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 2004050754 W